# EUROPÄISCHE PATENTANMELDUNG

(11) **EP 0 742 129 A2**
(43) Veröffentlichungstag der Anmeldung: **13.11.1996**
(21) Anmeldenummer: 96106077.9
(22) Anmeldetag: 18.04.1996
(51) Int. Cl.: B60S 1/52

(54) **Spritzeinrichtung zur Abgabe von Waschflüssigkeit auf eine zu reinigende Scheibe eines Fahrzeuges**

(30) Priorität: 10.05.1995 DE 19517055
(71) Anmelder: ITT Automotive Europe GmbH, 60488 Frankfurt (DE)
(72) Erfinder: Egner-Walter, Bruno, 74076 Heilbronn (DE); Schmid, Eckhardt, 74336 Brackenheim (DE)
(74) Vertreter: Jahn, Wolf-Diethart

(57) **Zusammenfassung**

Die Erfindung geht aus von einer allgemein bekannten Spritzeinrichtung mit mindestens zwei örtlich voneinander am Fahrzeug angebrachten Waschdüsen (I, II) welche über ein Schlauchleitungssystem von einer Pumpe (2), die mit einem Vorratsbehälter (1) für Waschflüssigkeit verbunden ist, mit Waschflüssigkeit beaufschlagbar sind. In das bekannte Schlauchleitungssystem sind separate Verzweigungsstücke in Y-oder T-Form zur Aufteilung des geförderten Waschflüssigkeitsstromes auf die vorhandenen Waschdüsen integriert. Aufgabe der Erfindung ist es, die Anzahl der für die Spritzeinrichtung erforderlichen Bauteile zu verringern, sowie die Montage der Spritzeinrichtung zu vereinfachen. Der Grundgedanke der Erfindung besteht darin, auf separate Verteilerstücke zu verzichten und deren Verteilerfunktion direkt in das Bauteil "Waschdüse" zu integrieren. Dementsprechend kommen nunmehr Waschdüsen zur Anwendung, welche mindestens zwei Schlauchanschlußstutzen (6, 7) besitzen, welche flüssigkeitsleitend miteinander verbunden sind. Hierbei ist an den einen Schlauchanschlußstutzen (6) eine an die Pumpe (2) angeschlossene Schlauchleitung (4) angeschlossen und an den anderen Schlauchanschlußstutzen (7) ist eine weitere Schlauchleitung (10) angeschlossen, die an den Schlauchanschlußstutzen (12) einer zweiten Waschdüse (II) angeschlossen ist.

## Beschreibung

Die Erfindung geht aus von einer heutzutage bereits weitverbreiteten Art einer Spritzeinrichtung zur Abgabe von Waschflüssigkeit auf eine zu reinigende Scheibe eines Fahrzeuges. Eine derartige Spritzeinrichtung besitzt mindestens 2 Waschdüsen, welche getrennt voneinander an dem Fahrzeug angebracht sind. Zumeist sind diese Waschdüsen vor der Windschutzscheibe an der Karosserie des Fahrzeuges und dabei zumeist auf der Motorhaube angebracht. Diese Waschdüsen werden beim Betrieb über ein Schlauchleitungssystem von einer Pumpe mit Waschflüssigkeit versorgt, wobei die Pumpe mit einem Vorratsbehälter für Waschflüssigkeit verbunden ist. Bei einer Scheibenreinigungsanlage dieser bekannten Art mit mindestens zwei Waschdüsen wird die an die Pumpe angeschlossene Schlauchleitung mittels eines Verteilerstückes in T-Form oder Y-Form derartig verzweigt, daß ausgehend von dem Verteilerstück jeweils eine Schlauchleitung zu einer der vorhandenen Waschdüsen führt und an deren Anschlußstutzen angeschlossen ist. Bei einer Spritzeinrichtung mit zwei Waschdüsen ist die Verwendung eines Verteilerstückes erforderlich, wobei insgesamt 6 Schlauchverbindungen herzustellen sind. Bei einer Spritzeinrichtung mit drei Waschdüsen sind bereits zwei Verteilerstücke erforderlich, und es müssen 10 Schlauchverbindungen hergestellt werden. Nachteilig an einer Spritzeinrichtung dieser bekannten Art ist, daß ein oder mehrere separate Verteilerstücke benötigt werden, welche bei der Montage der Spritzeinrichtung zusätzlich gehandhabt werden müssen und wodurch eine unnötig große Anzahl von Schlauchverbindungen hergestellt werden muß. Die Herstellung bzw. Montage einer solchen Spritzeinrichtung ist also sehr aufwendig und zeitintensiv und somit auch teuer.

Aufgabe der Erfindung ist es, eine Spritzeinrichtung der eingangs genannten Art dahingehend zu verbessern, daß die Anzahl der benötigten Bauteile verringert und deren Montage zu einer Spritzeinrichtung vereinfacht wird.

Erfindungsgemäß wird die Aufgabe durch eine Spritzeinrichtung gemäß Anspruch 1 beziehungsweise durch eine Waschdüse gemäß Anspruch 4 gelöst.

Dadurch, daß bei einer erfindungsgemäßen Spritzeinrichtung eine erste Waschdüse zwei miteinander hydraulisch verbundene Schlauchanschlußstutzen aufweist, wobei unmittelbar an einen dieser beiden Schlauchanschlußstutzen eine an die Pumpe angeschlossene Schlauchleitung angeschlossen ist, und daß eine zweite Waschdüse mit nur einem Schlauchanschlußstutzen an eine Schlauchleitung angeschlossen ist, welche mit ihrem anderen Ende an dem anderen Schlauchanschlußstutzen der ersten Waschdüse angeschlossen ist, ist eine deutliche Vereinfachung der Spritzeinrichtung realisiert. In diesem Fall müssen insgesamt nur 4 Schlauchverbindungen hergestellt werden, wobei außerdem die Verwendung eines separaten Verteilerstückes entfällt. Der geringfügige Mehraufwand für die Herstellung einer ersten Waschdüse mit zwei hydraulisch miteinander verbundenen Schlauchanschlußstutzen ist vernachlässigbar gering gegenüber der erzielten Vereinfachung der Spritzeinrichtung.

Wenn an ein Fahrzeug eine erfindungsgemäße Spritzeinrichtung mit insgesamt drei Waschdüsen montiert werden soll, wird eine vorteilhafte Ausgestaltung gemäß Anspruch 2 empfohlen. In diesem Fall wird eine erste Waschdüse verwendet, welche einen zusätzlichen, das heißt einen dritten, Schlauchanschlußstutzen aufweist, welcher hydraulisch mit den beiden anderen Schlauchanschlußstutzen verbunden ist. An einen dieser drei Schlauchanschlußstutzen ist wiederum eine an den Ausgangsstutzen der Pumpe angeschlossene Schlauchleitung angeschlossen. Der einzige Schlauchanschlußstutzen einer dritten, herkömmlichen Waschdüse ist nunmehr an eine Schlauchleitung angeschlossen, welche mit ihrem anderen Ende an den zusätzlichen, dritten Schlauchanschlußstutzen der ersten Waschdüse angeschlossen ist. Wie bereits vorstehend beschrieben, ist auch in diesem Fall die zweite Waschdüse mit ihrem einzigen Schlauchanschlußstutzen mittels einer Schlauchleitung an einen der drei Schlauchanschlußstutzen der ersten Waschdüse angeschlossen. Der einfache und mit wenig Montageaufwand herstellbare Aufbau dieser Spritzeinrichtung zeichnet sich wiederum durch eine besondere Einfachheit aus. Bei der Montage dieser Spritzeinrichtung mit drei Waschdüsen müssen insgesamt sechs Schlauchverbindungen hergestellt werden, wobei die Verwendung zusätzlicher Verteilerstücke vollständig entfällt. Nach herkömmlichem Stand der Technik wäre für eine Spritzeinrichtung mit drei Waschdüsen die Verwendung von zwei T-förmigen bzw. Y-förmigen Verteilerstücken erforderlich, und es müßten 10 Schlauchverbindungen hergestellt werden.

Für Spritzeinrichtungen mit mehr als drei Waschdüsen wird eine Ausgestaltung gemäß der Merkmalskombination des Anspruchs 3 vorgeschlagen. Hierbei wird in gewisser Weise der Grundgedanke der Erfindung und der Ausgestaltung gemäß Anspruch 2 noch weiter ausgeweitet. Weitere Einzelheiten hierzu sind in den Ausführungsbeispielen beschrieben.

Zur Lösung der erfindungsgemäßen Aufgabe trägt auch eine Waschdüse bei, die gemäß Anspruch 4 ausgebildet ist und zur Verwendung in einer erfindungsgemäßen Spritzeinrichtung gemäß Anspruch 1 bestimmt ist. Diese Waschdüse ist dadurch gekennzeichnet, daß sie im Unterschied zu herkömmlichen Waschdüsen mit nur einem einzigen Schlauchanschlußstutzen nunmehr mindestens zwei Schlauchanschlußstutzen besitzt, die hydraulisch miteinander verbunden sind. Eine solche Waschdüse führt durch ihre Verwendung zu einer Vereinfachung einer Spritzeinrichtung, insbesondere zur Verringerung des Montageaufwandes, und ermöglicht den Wegfall von ansonsten erforderlichen Verteilerstücken.

Bei einer Spritzeinrichtung mit zwei Waschdüsen kommen eine erfindungsgemäße Waschdüse mit zwei Schlauchanschlußstutzen und eine Waschdüse mit nur einem Schlauchanschlußstutzen in herkömmlicher Art zur Anwendung. Zum Aufbau einer Spritzeinrichtung mit drei Waschdüsen gemäß Anspruch 2 werden eine erfindungsgemäße Waschdüse mit drei Schlauchanschlußstutzen und zwei Waschdüsen mit nur einem Schlauchanschlußstutzen herkömmlicher Art verwendet. In Weiterführung dieses Gedankens sind Spritzeinrichtungen auch mit mehr als drei Waschdüsen herstellbar, wobei Kombinationen aus einer unterschiedlichen Anzahl von erfindungsgemäßen Waschdüsen mit mindestens zwei Anschlußstutzen und einer unterschiedlichen Anzahl von Waschdüsen mit nur einem Anschlußsstutzen herkömmlicher Art realisiert sind.

Vorteilhafte Ausgestaltungen einer Waschdüse gemäß Anspruch 4 sind durch die Merkmale der Ansprüche 5 bis 11 gekennzeichnet.

Wenn die geometrischen Verhältnisse der Fahrzeugkarosserie am Anbauort der erfindungsgemäßen Waschdüse die Verwendung von relativ kurzen Schlauchanschlußstutzen der Waschdüse zulassen, wird eine Ausgestaltung gemäß Anspruch 5 empfohlen. Insbesondere in Kombination mit den Merkmalen des Anspruchs 8 ergibt sich der Vorteil, daß die einzelnen Schlauchanschlußstutzen voneinander derart weit beabstandet sind, daß die Schlauchanschlüsse problemlos herstellbar sind. Andererseits wird gewährleistet, daß die Schlauchanschlußstutzen beim Anbau der Waschdüse an die Fahrzeugkarosserie durch einen entsprechenden Durchbruch hindurchführbar sind, der einen kleineren Querschnitt besitzt, als die Unterseite des Grundkörpers der Waschdüse. Ein zusätzlicher Vorteil ist hierbei, in einer Materialminimierung für die Anschlußstutzen zu sehen.

Für einen anderen Anwendungsfall, bei welchem ein größerer Abstand zwischen der Unterseite des Grundkörpers der Waschdüse und den Schlauchanschlußstutzen erforderlich ist, wird eine Ausgestaltung gemäß Anspruch 6 empfohlen. Um hierbei für einen ausreichenden Abstand zwischen den Schlauchanschlußstutzen zu sorgen, sind diese in Umfangsrichtung und/oder in axialer Richtung des Hauptstutzens zueinander versetzt angeordnet. Dabei können die mindestens zwei Schlauchanschlußstutzen außerdem in einem flachen spitzen Winkel zueinander angeordnet sein.

Die Auswahl bzw. Kombination von Merkmalen aus den Ansprüchen 5 bis 8 kann auch unter dem Gesichtspunkt vorgenommen werden, wie die Schlauchleitung am Fahrzeug montiert bzw. geführt ist, woraus sich vorteilhafte geometrische Gestaltungen der mindestens zwei Schlauchanschlußstutzen der erfindungsgemäßen Waschdüse ableiten.

Eine weitere vorteilhafte Ausgestaltung gemäß Anspruch 9 ist darauf gerichtet, den grundlegenden Erfindungsgedanken auf eine Waschdüse anzuwenden, bei welcher zwei voneinander getrennt beaufschlagbare Spritzöffnungen bzw. Gruppen von Spritzöffnungen alternierend mit Waschflüssigkeit versorgt werden. Die alternierende Beaufschlagung der getrennten Spritzöffnungen bzw. Gruppen von Spritzöffnungen, ist dabei so gesteuert, daß die Abgabe von Waschflüssigkeit jeweils nur auf einen Abschnitt der zu reinigenden Scheibe erfolgt, welcher in der jeweiligen Bewegungsrichtung des Wischarmes vor dem Wischblatt liegt. In diesem Fall ist vorgesehen, daß die Waschdüse für jede der zwei voneinander getrennten Spritzöffnungen bzw. Gruppe von Spritzöffnungen jeweils mindestens zwei Schlauchanschlußstutzen besitzt, welche miteinander hydraulisch verbunden sind. In Abhängigkeit von den vorliegenden konkreten Einsatzbedingungen kann hierbei eine Ausgestaltung gemäß Anspruch 9 von Vorteil sein, bei welcher an der Unterseite des Grundkörpers der Waschdüse ein Hauptstutzen mit zwei voneinander getrennten Kanälen angeordnet ist, wobei jeweils einer der Kanäle mit einer der Spritzöffnungen bzw. Gruppe von Spritzöffnungen verbunden ist und für jeden der zwei Kanäle des Hauptstutzens jeweils mindestens zwei Schlauchanschlußstutzen seitlich an dem Hauptstutzen angeordnet sind und über einen der Kanäle des Hauptstutzens miteinander hydraulisch verbunden sind.

Als besonders vorteilhaft wird eine Ausgestaltung gemäß Anspruch 11 empfohlen, wobei jeweils ein der einen Spritzöffnung bzw. Gruppe von Spritzöffnungen zugeordneter Schlauchanschlußstutzen und ein der anderen Spritzöffnung bzw. anderen Gruppe von Spritzöffnungen zugeordneter Schlauchanschlußstutzten als Doppelstutzen mit zwei voneinander getrennten Kanälen zusammengefaßt sind. Eine solche Ausgestaltung vereinfacht die Montage einer Spritzeinrichtung erheblich, da in einem Arbeitsgang gleichzeitig zwei Schlauchanschlüsse herstellbar sind. Von Vorteil ist hierbei noch, wenn die Schlauchanschlußstutzen und die zu verwendenden Doppelschlauchlleitungen in kodierter Art und Weise miteinander zu verbinden sind. Dadurch werden Montagefehler vermieden, welche zu einer falschen Steuerung der Spritzeinrichtung führen würden.

Anhand von Ausführungsbeispielen wird die Erfindung nachfolgend näher beschrieben. In den zugehörigen Zeichnungen zeigen:
- Fig. 1: in schematischer Darstellung ein grundlegendes Ausführungsbeispiel einer Spritzeinrichtung zur Abgabe von Waschflüssigkeit auf eine zu reinigende Scheibe,
- Fig. 2: in schematischer Darstellung ein Ausführungsbeispiel einer Spritzeinrichtung mit drei Waschdüsen,
- Fig. 3: in schematischer Darstellung ein Ausführungsbeispiel einer Spritzeinrichtung mit vier Waschdüsen,
- Fig. 4: in Schnittdarstellung ein Ausführungsbeispiel einer erfindungsgemäßen Waschdüse,
- Fig. 5: in Schnittdarstellung ein anderes Ausführungsbeispiel einer erfindungsgemäßen Waschdüse,
- Fig. 6: in Schnittdarstellung ein Ausführungsbeispiel einer erfindungsgemäßen Waschdüse mit zwei voneinander getrennt mit Waschflüssigkeit beaufschlagbaren Spritzöffnungen,
- Fig. 7: einen Querschnitt des Stutzens einer Waschdüse im Bereich der Schlauchanschlußstutzen.

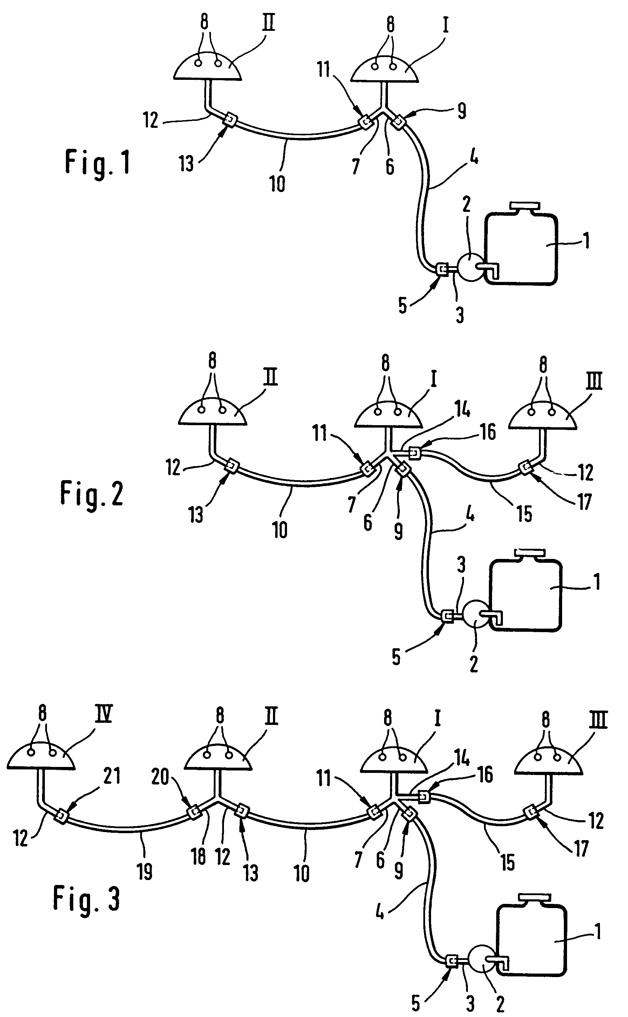

In der in Fig. 1 schematisch dargestellten Spritzeinrichtung zur Abgabe von Waschflüssigkeit auf eine zu reinigende Scheibe eines Fahrzeuges ist ein Vorratsbehälter 1 für Waschflüssigkeit erkennbar, an dem eine Pumpe 2 so angebracht ist, daß ihr Saugstutzen durch eine Wand des Vorratsbehälters 1 in diesen hineinragt. Die Pumpe 2 besitzt einen Austrittsstutzen 3, an den eine Schlauchleitung 4 angeschlossen ist, wodurch der Schlauchanschluß 5 hergestellt ist. Die Schlauchleitung 4 führt zu einer ersten Waschdüse I, welche in bekannter Art und Weise vor der zu reinigenden Scheibe auf der Fahrzeugkarosserie, beispielsweise auf der Motorhaube des Fahrzeuges, anzubringen ist. Diese erste Waschdüse I ist mit einem ersten Schlauchanschlußstutzen 6 und einem zweiten Schlauchanschlußstutzen 7 ausgestattet, welche miteinander hydraulisch verbunden sind. Die beiden Schlauchanschlußstutzen 6, 7 sind außerdem über einen aus der Zeichnung nicht ersichtlichen gemeinsamen Kanal bzw. eine gemeinsame Kammer im Inneren der Waschdüse I mit den beiden Spritzöffnungen 8 verbunden. An den ersten Schlauchanschlußstutzen 6 ist das andere Ende der an den Austrittsstutzen 3 der Pumpe 2 angeschlossenen Schlauchleitung 4 angeschlossen, so daß der Schlauchanschluß 9 hergesetellt ist.

An den zweiten Schlauchanschlußstutzen 7 der ersten Waschdüse I ist eine weitere Schlauchleitung 10 angeschlossen, so daß der Schlauchanschluß 11 hergestellt ist. Das andere Ende der Schlauchleitung 10 ist an den einzigen Schlauchanschlußstutzen 12 einer zweiten Waschdüse II angeschlossen, so daß der Schlauchanschluß 13 hergestellt ist. Die zweite Waschdüse II ist örtlich getrennt von der ersten Waschdüse 1 ebenfalls vor der zu reinigenden Scheibe des Fahrzeuges analog zu der ersten Waschdüse I angebracht. Sie besitzt in herkömmlicher Weise nur einen einzigen Schlauchanschlußstutzen 12, der in bekannter Weise über einen Kanal bzw. eine Kammer im Inneren der Waschdüse II mit deren beiden Spritzöffnungen 8 verbunden ist.

Bei Betätigung der Spritzeinrichtung fördert die Pumpe 2 Waschflüssigkeit über die Schlauchleitung 4 zu der ersten Waschdüse I. Unmittelbar an der flüssigkeitsleitenden Verbindung zwischen dem ersten Schlauchanschlußstutzen 6 und dem zweiten Schlauchanschlußsstutzen 7 wird der durch die Schlauchleitung 4 geförderte Waschflüssigkeitsstrom verteilt, so daß ein Teil der Waschflüssigkeit zu den Spritzöffnungen 8 der ersten Waschdüse I gelangt, und ein anderer Teil der Waschflüssigkeit über den zweiten Schlauchanschlußstutzen 7 der ersten Waschdüse I und die Schlauchleitung 10 zu dem Schlauchanschlußstutzen 12 der zweiten Waschdüse II und weiter zu deren Spritzöffnungen 8 gefördert wird. Vorteilhaft hierbei ist, wenn die Querschnitte der Spritzöffnungen 8 der Waschdüsen I und II sowie verschiedener flüssigkeitsführender Leitungsquerschnitte so aufeinander abgestimmt sind, daß die Spritzöffnungen 8 der Waschdüsen I und II zumindest annähernd gleichzeitig und mit einer annähernd gleichen Menge Waschflüssigkeit versorgt werden.

Aus Fig. 1 ist eindeutig der besonders einfache Aufbau der Spritzeinrichtung erkennbar, bei welcher gegenüber dem bekannten Stand der Technik auf ein zusätzliches Verteilerstück in Y- beziehungsweise T-Form zur Verteilung des von der Pumpe 2 geförderten Waschflüssigkeitsstromes auf die beiden Waschdüsen I und II verzichtet werden kann. Damit entfällt gleichzeitig gegenüber dem bekannten Stand der Technik eine Schlauchleitung und mit den zwei erforderlichen Schlauchleitungen 4 und 10 müssen lediglich vier Schlauchanschlüsse 5, 9, 11, 13 gegenüber sechs Schlauchanschlüssen bei herkömmlicher Spritzeinrichtung hergestellt werden. Die Anzahl derjenigen Einzelteile, die zu einer Spritzeinrichtung zusammenzusetzen sind, ist gegenüber den bekannten Spritzeinrichtungen der eingangs beschriebenen Art deutlich verringert, woraus eine vorteilhafte Verringerung des Montageaufwandes und einer Kosteneinsparung resultieren.

Die in Fig. 2 schematisch dargestellte Spritzeinrichtung beruht im wesentlichen auf einer grundlegenden Ausführung einer Spritzeinrichtung gemäß Fig. 1, welche um eine dritte Waschdüse III erweitert worden ist. Im Unterschied zu Fig. 1 ist in Fig. 2 erkennbar, daß die erste Waschdüse I nunmehr mit einem zusätzlichen, dritten Schlauchanschlußstutzen 14 ausgestattet ist, der mit den anderen beiden Schlauchanschlußstutzen 6, 7 hydraulisch bzw. flüssigkeitsleitend verbunden ist. An diesen dritten Schlauchanschlußstutzen 14 der ersten Waschdüse I ist eine weitere Schlauchleitung 15 angeschlossen, so daß der Schlauchanschluß 16 hergesetellt ist. Die Schlauchleitung 15 führt zu der dritten Waschdüse III, welche in analoger Weise zu den Waschdüsen I und II örtlich getrennt auf der Fahrzeugkarosserie befestigt ist. Die dritte Waschdüse III entspricht prinzipiell der zweiten Waschdüse II und besitzt ebenfalls nur einen einzigen Schlauchanschlußstutzen 12, der in bereits beschriebener Art mit den beiden Spritzöffnungen 8 verbunden ist. An diesen einzigen Schlauchanschlußstutzen 12 der dritten Waschdüse III ist das andere Ende der Schlauchleitung 15 angeschlossen, so daß der Schlauchanschluß 17 hergestellt ist.

Aus Fig. 2 ist somit eine Spritzeinrichtung ersichtlich, welche über einen denkbar einfachen Aufbau verfügt. Mit nur drei Schlauchleitungen 4, 10, 15, welche lediglich die Herstellung von 6 Schlauchanschlüssen 5, 9, 11, 13, 16, 17 erfordern, ist diese Spritzeinrichtung unter Wegfall von zwei separaten Verteilerstücken aufgebaut. Eine mit den Merkmalen des bekannten Standes der Technik aufgebaute, vergleichbare Spritzeinrichtung würde demgegenüber die Verwendung von zwei separaten Verteilerstücken sowie von fünf Schlauchleitungen erfordern, wobei insgesamt zehn Schlauchanschlüsse herzustellen wären.

Bei der in der in Fig. 2 dargestellten Spritzeinrichtung wird der von der Pumpe 2 durch die Schlauchleitung 4 geförderte Waschflüssigkeitsstrom an der ersten Waschdüse I derartig aufgeteilt, daß ein Teil der Waschflüssigkeit zu den Spritzöffnungen 8 der ersten Waschdüse I, ein anderer Teil der Waschflüssigkeit über den Schlauchanschlußstutzen 7 der ersten Waschdüse I und die Schlauchleitung 10 sowie den Schlauchanschlußstutzen 12 zu den Spritzöffnungen 8 der zweiten Waschdüse II und ein weiterer Teil der Waschflüssigkeit über den dritten Schlauchanschlußstutzen 14 der ersten Waschdüse I und über die Schlauchleitung 15 sowie den Schlauchanschlußstutzen 12 zu den Spritzöffnungen 8 der dritten Waschdüse III gelangt.

Eine noch weiter ausgebaute Spritzeinrichtung, welche von einer Spritzeinrichtung gemäß Fig. 2 ausgeht, ist schematisch in Fig. 3 dargestellt. Diese Spritzeinrichtung ist nunmehr mit insgesamt 4 Waschdüsen I - IV ausgestattet. Im Unterschied zu der Spritzeinrichtung von Fig. 2 ist hierbei die zweite Waschdüse II mit einem ersten Schlauchanschlußstutzen 12' und einem zweiten Schlauchanschlußstutzen 18 ausgestattet, welche hydraulisch bzw. flüssigkeitsleitend miteinander verbunden sind. Diese zweite Waschdüse II entspricht damit einer Waschdüse, welche als erste Waschdüse I in der Spritzeinrichtung gemäß Fig. 1 verwendet wird. An den ersten Schlauchanschlußstutzen 12' der zweiten Waschdüse II ist nunmehr das andere Ende der Schlauchleitung 10 angeschlossen, welche bei dem Schlauchanschluß 11 mit dem zweiten Schlauchanschlußstutzen 7 der ersten Waschdüse I verbunden ist. Der Schlauchanschluß der Schlauchleitung 10 an dem ersten Schlauchanschlußstutzen 12' der zweiten Waschdüse II ist mit 13 bezeichnet. An den zweiten Schlauchanschlußstutzen 18 der zweiten Waschdüse II ist nunmehr eine weitere Schlauchleitung 19 angeschlossen, so daß der Schlauchanschluß 20 hergestellt ist. Die Schlauchleitung 19 führt zu der vierten Waschdüse IV und ist mit ihrem anderen Ende an den einzigen Schlauchanschlußstutzen 12 der vierten Waschdüse IV angeschlossen, so daß der Schlauchanschluß 21 hergestellt ist. Die vierte Waschdüse IV der Spritzeinrichtung von Fig. 3 gleicht der zweiten Waschdüse II der Spritzeinrichtungen von Fig. 1 bzw. 2.

Bei anderer Betrachtungsweise kann man auch davon ausgehen, daß die Spritzeinrichtung von Fig. 2 durch Zwischenschalten einer Waschdüse mit zwei Anschlußstutzen, welche der Waschdüse I aus Fig. 1 gleicht, zwischen die erste Waschdüse I und die zweite Waschdüse II in Fig. 2 zu einer Spritzeinrichtung gemäß Fig. 3 erweitert ist. Unabhängig davon ist erkennbar, daß auch die Spritzeinrichtung gemäß Fig. 3 einen äußerst einfachen Aufbau aufweist und aus einer verringerten Anzahl von Einzelteilen mit verringertem Montageaufwand herstellbar ist.

Zusammenfassend kann also festgestellt werden, daß die Spritzeinrichtung gemäß Fig. 1 mit einer neuartigen Waschdüse mit zwei Schlauchanschlußstutzen und einer Waschdüse herkömmlicher Art mit nur einem Schlauchanschlußstutzen aufgebaut ist. Für den Aufbau der Spritzeinrichtung gemäß Fig. 2 wurden eine neuartige Waschdüse mit drei Schlauchanschlußstutzen und zwei Waschdüsen bekannter Art mit nur einem Schlauchanschlußstutzen verwendet. In der Spritzeinrichtung gemäß Fig. 3 kommen eine neuartige Waschdüse mit drei Schlauchanschlußstutzen und eine neuartige Waschdüse mit zwei Schlauchanschlußstutzen sowie zwei Waschdüsen herkömmlicher Art mit nur einem Schlauchanschlußstutzen zur Anwendung.

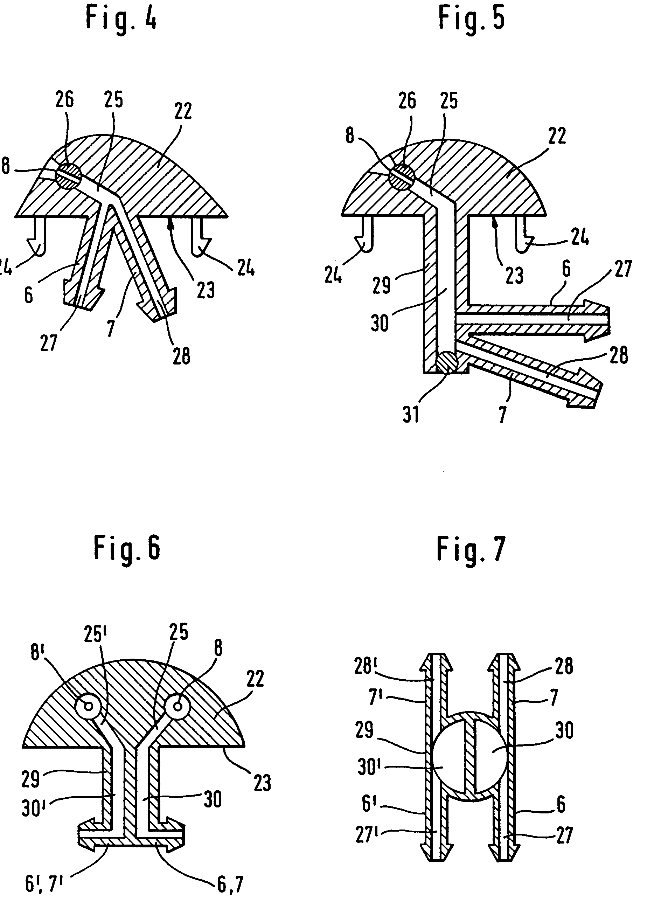

Fig. 4 zeigt in schematischer Darstellung eine mögliche Ausführung einer erfindungsgemäßen Waschdüse. Diese Waschdüse besitzt einen Grundkörper 22 mit einer Unterseite 23, mit welcher der Grundkörper 22 im montierten Zustand auf der Fahrzeugkarosserie bzw. der Motorhaube des Fahrzeuges aufliegt, wobei unter Umständen eine nicht dargestellte elastische Dichtung zwischen die Unterseite 23 des Grundkörpers 22 und die Außenseite der Fahrzeugkarosserie einzubringen ist. An der Unterseite 23 des Grundkörpers 22 sind ein erster Schlauchanschlußstutzen 6 und ein zweiter Schlauchanschlußstutzen 7 angebracht, die von der Unterseite 23 nach unten abstehen. Die beiden Schlauchanschlußstutzen 6 und 7 sind dabei in einem spitzen Winkel zueinander angeordnet.

Damit wird erreicht, daß einerseits die erforderliche räumliche Freiheit zwischen den beiden Schlauchanschlußstutzen 6 und 7 für die Herstellung von Schlauchanschlüssen vorhanden ist. Andererseits liegen die freien Enden der Schlauchanschlußstutzen 6 und 7 immerhin noch so dicht beisammen, daß sie bei ihrer Montage durch einen Durchbruch in der Fahrzeugkarosserie bzw. der Motorhaube hindurchgeführt werden können, welcher einen kleineren Querschnitt aufweist, als die Unterseite 23 des Grundkörpers 22 der Waschdüse. An der Unterseite 23 sind weiterhin Rastelemente 24 zu sehen, welche dazu dienen, den soeben beschriebenen Durchbruch in der Fahrzeugkarosserie bzw. Motorhaube zu hintergreifen und damit die Waschdüse am Fahrzeug zu fixieren. Weiterhin ist erkennbar, daß im Inneren des Grundkörpers 22 ein Kanal 25 verläuft, an dessen sich trichterförmig erweiternden Mündung eine in begrenztem Bereich räumich verschwenkbare Spritzkugel 26 angeordnet ist, in welche die Spritzöffnung 8 eingebracht ist. Die Flüssigkeitskanäle 27 und 28 der Schlauchanschlußstutzen 6 und 7 münden beide im Inneren des Grundkörpers 22 in den Kanal 25 ein und sind dadurch hydraulisch bzw. flüssigkeitsleitend miteinander verbunden.

Eine Waschdüse gemäß Fig. 4 ist vorteilhaft herstellbar, indem der Grundkörper 22 einschließlich Schlauchanschlußstutzen 6 und 7 und Rastelemente 24 als einstückiges Bauteil aus Kunststoff hergestellt wird. Diese Waschdüse ist zum Aufbau einer Spritzeinrichtung gemäß Fig. 1 als erste Waschdüse I oder zum Aufbau einer Spritzeinrichtung gemäß Fig. 3 als zweite Waschsdüse II verwendbar. Die dabei erzielbaren Vorteile, welche auch auf die Waschdüse selbst zurückzuführen sind, sind im Zusammenhang mit den Spritzeinrichtungen bereits ausführlich beschrieben worden.

In Fig. 5 ist in schematischer Darstellung ein anderes Ausführungsbeispiel einer erfindungsgemäßen Waschdüse zu sehen. Analog zu der Waschdüse gemäß Fig. 4 besitzt auch die Waschdüse gemäß Fig. 5 einen Grundkörper 22 mit einer Unterseite 23. Etwa mittig ist an die Unterseite 23 des Grundkörpers ein Hauptstutzen 29 angeformt, der senkrecht von der Unterseite 23 nach unten absteht und einen Hauptkanal 30 aufweist. In den Grundkörper 22 ist wiederum ein Kanal 25 eingeformt, an dessen Mündung eine Spritzkugel 26 mit der Spritzöffnung 8 räumlich verschenkbar angeordnet ist. Der Kanal 25 erstreckt sich von der Spritzkugel 26 in Richtung zur Unterseite 23 und geht dort in den Hauptkanal 30 des Hauptstutzens 29 über. Die gezeigte Waschdüse besitzt wiederum einen ersten Schlauchanschlußstutzen 6 mit einem Flüssigkeitskanal 27 und einen Schlauchanschlußstutzen 7 mit einem Flüssigkeitskanal 28. Die Schlauchanschlußstutzen 6 und 7 sind nahe dem unteren Ende des Hauptsutzens 30 seitlich an diesen angeformt. Dabei sind die Schlauchanschlußstutzen 6 und 7 bezogen auf die axiale Richtung des Hauptstutzens 29 hintereinander angeordnet, wobei der obere Schlauchanschlußstutzen 6 rechtwinklig von der Wand des Hauptstutzens 29 absteht und der untere Schlauchanschlußstutzen 7 in einem spitzen Winkel zu dem ersten Schlauchanschlußstutzen 6 angeordnet ist. Der spitze Winkel zwischen den beiden Schlauchanschlußstutzen 6 und 7 sorgt wiederum dafür, daß die Schlauchanschlußstutzen 6 und 7 und der Hauptstutzen 29 beim Anbau der Waschdüse an das Fahrzeug durch einen entsprechenden Durchbruch in der Fahrzeugkarosserie bzw. der Motorhaube hindurchführbar sind und andererseits genügend Platz zwischen den Schlauchanschlußstutzen 6 und 7 für die Herstellung der entsprechenden Schlauchanschlüsse vorhanden ist.

Aus Fig. 5 ist noch ersichtlich, daß die beiden Flüssigkeitskanäle 27 und 28 der Schlauchanschlußstutzen 6 und 7 in den Hauptkanal 30 des Hauptstutzens 29 einmünden und dadurch hydraulisch bzw. flüssigkeitsleitend miteinander verbunden sind. Da auch in diesem Fall der Grundkörper 22 einschließlich Hauptstutzen 29, Schlauchanschlußstutzen 6 und 7 und Rastelemente 24 als einstückiges Bauteil aus Kunststoff hergestellt ist, ist die untere stirnseitige Öffnung des Hauptkanales 30 durch eine eingesetzte Kugel 31 verschlossen. Die stirnseitige Öffnung des Hauptkanales 30 ist für die Herstellung des Hauptkanales 30 aus werkzeugtechnischen Gesichtspunkten erforderlich.

Auch die in Fig. 5 dargestellte Waschdüse ist zum Aufbau einer Spritzeinrichtung gemäß Fig. 1 als erste Waschdüse I oder zum Aufbau einer Spritzeinrichtung gemäß Fig. 3 als zweite Waschdüse II einsetzbar. Die daraus resultierenden Vorteile sind bereits hinreichend beschrieben worden. Um eine Waschdüse gemäß Fig. 4 oder gemäß Fig. 5 als erste Waschdüse I in einer Spritzeinrichtung gemäß Fig. 2 oder gemäß Fig. 3 verwenden zu können, müßte die Waschdüse jeweils mit einem zusätzlichen, dritten Schlauchanschlußstutzen 14 ausgestattet werden. Dieses wäre jeweils in Fortführng des beschrittenen Lösungsweges ohne weiteres durchführbar.

Aus der schematischen Darstellung von Fig. 6 ist eine Waschdüse erkennbar, die zwei voneinander getrennte Spritzöffnungen 8 bzw. 8' besitzt, welche gesteuert alternierend mit Waschflüssigkeit beaufschlagbar sind. Anstelle von jeweils nur einer Spritzöffnung 8 bzw. 8' könnte auch jeweils eine Gruppe von Spritzöffnungen 8 bzw. 8' vorgesehen sein. Derartige Waschdüsen werden im Zusammenhang mit Scheibenwischvorrichtungen so eingesetzt, daß die Waschflüssigkeit jeweils aus der einen Spritzöffnug 8 oder der anderen Spritzöffnung 8' auf einen Abschnitt der zur reinigenden Scheibe abgegeben wird, welcher mit Bezug auf die jeweilige Bewegungsrichtung des Scheibenwischers vor dem Wischblatt liegt.

An die Unterseite 23 des Grundkörpers 22 der Waschdüse ist einstückig ein Hauptstutzen 29 angeformt, der senkrecht nach unten von der Unterseite 23 absteht. Der Hauptstutzen 29 besitzt zwei voneinander getrennte Hauptkanäle 30 und 30'. Der Hauptkanal 30 ist über einen im Inneren des Grundkörpers 22 befindlichen Kanal 25 flüssigkeitsleitend mit der Spritzöffnung 8 verbunden, und der Hauptkanal 30' ist über einen Kanal 25' im Inneren des Grundkörpers 22 mit der Spritzöffnung 8' verbunden. Nunmehr ist der Erfindungsgedanke auch an dieser Waschdüse mit dem Hauptstutzen 29 mit zwei voneinander getrennten Kanälen 30 und 30' verwirklicht. Dazu sind am unteren Ende des Hauptstutzens 29, wie auch aus Fig. 7 ersichtlich, seitlich ein erster Schlauchanschlußstutzen 6 und ein zweiter Schlauchanschlußstutzen 7 angeordnet, deren Flüssigkeitskanäle 27 und 28 in den Hauptkanal 30 des Hauptstutzens 29 einmünden und somit hydraulisch bzw. flüssigkeitsleitend miteinander verbunden sind. Weiterhin sind in gleicher Ebene an dem Hauptstutzen 29 ein weiterer erster Schlauchanschlußstutzen 6' und ein weiterer zweiter Schlauchanschlußstutzen 7' angeordnet, deren Flüssigkeitskanäle 27' und 28' in den anderen Hauptkanal 30' einmünden und somit miteinander hydraulisch bzw. flüssigkeitsleitend verbunden sind.

An die ersten Schlauchanschlußstutzen 6 und 6' ist jeweils eine Schlauchleitung anschließbar, welche an ihrem anderen Ende mit jeweils einem Austrittsstutzen einer von zwei Pumpen bzw. mit jeweils einem von zwei Austrittsstutzen einer einzigen, mit Bezug auf ihre Förderrichtung steuerbaren Pumpe verbunden sind. An die jeweils zweiten Schlauchanschlußstutzen 7 bzw. 7' ist jeweils eine weitere Schlauchleitung angeschlossen, welche zu einer weiteren Waschdüse mit zwei voneinander getrennten Spritzöffnungen führen und an die entsprechend zugeordneten Schlauchanschlußstutzen dieser weiteren Waschsdüse angeschlossen sind.

Mit einer solchen erfindungsgemäßen Waschdüse sind den in den Fig. 1 bis 3 gezeigten Spritzeinrichtungen analoge Spritzeinrichtungen aufzubauen, wobei in entsprechender Weise die vorhandenen Schlauchanschlußstutzen sowie die vorhandenen Schlauchleitungen sinngemäß paarweise vorzusehen sind.

### Bezugszeichenliste

- 1: Vorratsbehälter (für Waschflüssigkeit)
- 2: Pumpe
- 3: Austrittsstutzen
- 4: Schlauchleitung
- 5: Schlauchanschluß
- 6: (1.) Schlauchanschlußstutzen
- 6': (1.) Schlauchanschlußstutzen
- 7: (2.) Schlauchanschlußstutzen
- 7': (2.) Schlauchanschlußstutzen
- 8: Spritzöffnung
- 8': Spritzöffnung
- 9: Schlauchanschluß
- 10: Schlauchleitung
- 11: Schlauchanschluß
- 12: Schlauchanschlußstutzen
- 12': Schlauchanschlußstutzen
- 13: Schlauchanschluß
- 14: (3.) Schlauchanschlußstutzen
- 15: Schlauchleitung
- 16: Schlauchanschluß
- 17: Schlauchanschluß
- 18: Schlauchanschlußstutzen
- 19: Schlauchleitung
- 20: Schlauchanschluß
- 21: Schlauchanschluß
- 22: Grundkörper
- 23: Unterseite
- 24: Rastelement
- 25: Kanal
- 25': Kanal
- 26: Spritzkugel
- 27: Flüssigkeitskanal
- 27': Flüssigkeitskanal
- 28: Flüssigkeitskanal
- 28': Flüssigkeitskanal
- 29: Hauptstutzen
- 30: Hauptkanal
- 30': Hauptkanal
- 31: Kugel
- I: (1.) Waschdüse
- II: (2.) Waschdüse
- III: (3.) Waschdüse
- IV: (4.) Waschdüse

## Patentansprüche

1. Spritzeinrichtung zur Abgabe von Waschflüssigkeit auf eine zu reinigende Scheibe eines Fahrzeuges mit mindestens zwei örtlich voneinander entfernt am Fahrzeug angebrachten Waschdüsen (I, II), welche über ein Schlauchleitungssystem von einer Pumpe (2) mit Waschflüssigkeit beaufschlagbar sind, wobei die Pumpe (2) mit einem Vorratsbehälter (1) für Waschflüssigkeit verbunden ist, **dadurch gekennzeichnet,** daß eine erste Waschdüse (I) der Spritzeinrichtung zwei miteinander hydraulisch verbundene Schlauchanschlußstutzen (6, 7) aufweist, daß an einen der beiden Schlauchanschlußstutzen (6, 7) der ersten Waschdüse (I) eine an den Austrittsstutzen (3) der Pumpe (2) angeschlossene Schlauchleitung (4) angeschlossen ist und daß an den anderen der beiden Schlauchanschlußstutzen (6, 7) der ersten Waschdüse (I) eine andere Schlauchleitung (10) angeschlossen ist, welche zu einer zweiten Waschdüse (II) der Spritzeinrichtung führt und an deren einzigen Schlauchanschlußstutzen (12) angeschlossen ist.

2. Spritzeinrichtung nach Anspruch 1, **dadurch gekennzeichnet,** daß die erste Waschdüse (I) der Spritzeinrichtung einen zusätzlichen, das heißt dritten, Schlauchanschlußstutzen (14) besitzt, der mit den anderen beiden Schlauchanschlußstutzen (6, 7) hydraulisch verbunden ist, und daß an den dritten Schlauchanschlußstutzen (14) der ersten Waschdüse (I) eine weitere Schlauchleitung (15) angeschlossen ist, welche zu einer dritten Waschdüse (III) der Spritzeinrichtung führt und an deren einzigen Schlauchanschlußstutzen (12) angeschlossen ist.

3. Spritzeinrichtung nach einem der vorhergehenden Ansprüche, **dadurch gekennzeichnet,** daß die zweite Waschdüse (II) und/oder die dritte Waschdüse (III) der Spritzeinrichtung einen zusätzlichen, das heißt zweiten Schlauchanschlußstutzen (18) besitzt, der mit dem ersten Schlauchanschlußstutzen (12') hydraulisch verbunden ist, und daß an den zweiten Schlauchanschlußstutzen (18) der zweiten Waschdüse (II) und/oder der dritten Waschdüse (III) eine weitere Schlauchleitung (19) angeschlossen ist, welche zu einer weiteren Waschdüse (IV) der Spritzeinrichtung führt und an deren einzigen Schlauchanschlußstutzen (12) angeschlossen ist.

4. Waschdüse für eine Spritzeinrichtung nach einem der vorhergehenden Ansprüche, die an einem Fahrzeug anzubringen ist, wobei die Waschdüse einen Grundkörper (22) mit einer Unterseite (23) aufweist, an welcher ein Stutzen zum Anschluß einer Schlauchleitung angeordnet ist, und wobei die Waschdüse eine oder mehrere Spritzöffnungen (8) aufweist, die im Inneren des Grundkörpers (22) über einen Kanal (25) oder eine Kammer mit dem Stutzen verbunden ist bzw. verbunden sind, wobei der Stutzen bei am Fahrzeug angebauter Waschdüse durch einen Durchbruch in der Fahrzeugkarosserie hindurchführt, **dadurch gekennzeichnet,** daß die Waschdüse mindestens zwei Schlauchanschlußstutzen (6, 7) besitzt, welche miteinander hydraulisch verbunden sind.

5. Waschdüse nach Anspruch 4, **dadurch gekennzeichnet,** daß die mindestens zwei hydraulisch miteinander verbundenen Schlauchanschlußstutzen (6, 7) unmittelbar an der Untersseite (23) des Grundkörpers (22) derartig angeordnet sind, daß sie beim Anbau der Waschdüse an das Fahrzeug durch den entsprechenden Durchbruch in der Fahrzeugkarosserie hindurchführbar sind, und daß die mindestens zwei Schlauchanschlußstutzen (6, 7) im Inneren des Grundkörpers (22) miteinander hydraulisch verbunden sind.

6. Waschdüse nach Anspruch 4, **dadurch gekennzeichnet,** daß an der Unterseite (23) des Grundkörpers (22) ein Hauptstutzen (29) angeordnet ist, der bei am Fahrzeug angebauter Waschdüse durch den entsprechenden Durchbruch in der Karosserie hindurchführt, und daß die mindestens zwei Schlauchanschlußstutzen (6, 7) in einem Abstand von der Unterseite (23) des Grundkörpers (22) seitlich an dem Hauptstutzen (29) angeordnet sind und über den Hauptstutzen (29) miteinander hydraulisch verbunden sind.

7. Waschdüse nach Anspruch 6**, dadurch gekennzeichnet,** daß die mindestens zwei Schlauchanschlußstutzen (6, 7) in Umfangsrichtung und/oder in axialer Richtung des Hauptstutzens (29) zueinander versetzt angeordnet sind.

8. Waschdüse nach einem der Ansprüche 4 bis 7, **dadurch gekennzeichnet,** daß die mindestens zwei Schlauchanschlußstutzen (6, 7) jeweils gerade ausgebildet sind und zueinander in einem flachen spitzen Winkel angeordnet sind.

9. Waschdüse nach Anspruch 4, wobei die Waschdüse zwei Spritzöffnungen (8, 8') bzw. zwei Gruppen von Spritzöffnungen (8, 8') besitzt, die voneinander abgegrenzt sind und unabhängig voneinander alternierend mit Waschflüssigkeit beaufschlagbar sind, **dadurch gekennzeichnet,** daß die Waschdüse für jede der zwei voneinander getrennten Spritzöffnungen (8, 8') bzw. Gruppe von Spritzöffnungen (8, 8') jeweils mindestens zwei Schlauchanschlußstutzen (6, 7; 6', 7') besitzt, welche jeweils miteinander hydraulisch verbunden sind.

10. Waschdüse nach Anspruch 9, **dadurch gekennzeichnet,** daß an der Unterseite (23) des Grundkörpers (22) ein Hauptstutzen (29) mit zwei voneinander getrennten Hauptkanälen (30, 30') angeordnet ist, wobei jeweils einer der beiden Hauptkanäle (30, 30') mit einer der Spritzöffnungen 8, 8' bzw. Gruppe von Spritzöffnungen (8, 8') verbunden ist und daß für jeden der zwei Hauptkanäle (30, 30') des Hauptstutzens (29) jeweils mindestens zwei Schlauchanschlußstutzen (6, 7; 6', 7') an dem Hauptstutzen (29) angeordnet sind und jeweils über einen der Hauptkanäle (30, 30') miteinander hydraulisch verbunden sind.

11. Waschdüse nach einem der Ansprüche 9 oder 10, **dadurch gekennzeichnet,** daß jeweils ein der einen Spritzöffnung (8) bzw. Gruppe von Spritzöffnungen (8) zugeordneter Schlauchanschlußstutzen (6, 7) und ein der anderen Spritzöffnung (8') bzw. Gruppe von Spritzöffnungen (8') zugeordneter Schlauchanschlußstutzen (6', 7') als Doppelstutzen mit zwei voneinander getrennten Flüssigkeitskanälen (27, 27'; 28, 28') zusammengefaßt sind, wobei eine Schlauchleitung mit zwei voneinander getrennten Schlauchkanälen, vorzugsweise in codierter Art und Weise, an den Doppelstutzen anschließbar ist.
